Europäisches Patentamt

European Patent Office

Office européen des brevets

(19)

(11) Publication number: **0 249 582**
**B1**

# (12) EUROPEAN PATENT SPECIFICATION

(45) Date of publication of the patent specification:
20.09.89

(51) Int. Cl.⁴: **F16H 57/06**

(21) Application number: 87830206.6

(22) Date of filing: 01.06.87

(54) Safety device for the control rod of a motor vehicle gearbox with five speeds and reverse.

(30) Priority: 10.06.86 IT 5351786 U

(43) Date of publication of application:
16.12.87 Bulletin 87/51

(45) Publication of the grant of the patent:
20.09.89 Bulletin 89/38

(84) Designated Contracting States:
DE ES FR GB SE

(56) References cited:
EP-A- 0 147 927
GB-A- 2 037 914
GB-A- 2 097 493
US-A- 4 018 099

(73) Proprietor: FIAT AUTO S.p.A., Corso Giovanni
Agnelli 200, I-10135 Torino(IT)

(72) Inventor: Montanaro, Enrico, Via Frejus 17,
I-10095 Grugliasco Torino(IT)

(74) Representative: Buzzi, Franco et al, c/o
Jacobacci-Casetta & Perani S.p.A. Via Alfieri, 17,
I-10121 Torino(IT)

EP 0 249 582 B1

## Description

The present invention relates to a motor vehicle gearbox with five speeds and reverse, of the type including a control rod carried by a support structure so as to be movable axially between three axial selection positions, in the first of which it enables the selection of the first or second gear ratio, in the second the selection of the third or fourth gear ratio, and in the third the selection of the fifth gear ratio or reverse, resilient means biasing the control rod into the second position which corresponds to the neutral condition of the gearbox, and the control rod being rotatable, in each of the axial selection positions, into first or second opposite angular positions for the respective engagement of the first or second gear ratio, the third or fourth gear ratio, and the fifth gear ratio or reverse.

Gearboxes of the aforesaid type are known (e.g. GB-A 2 097 493) in which a safety device comprising a catch appendage projecting radially from the control rod is provided for preventing the rotation of the control rod from the first angular position corresponding to the engagement of the fifth gear ratio to the second angular position corresponding to the engagement of reverse, when it is located in the third axial selection position.

These safety devices are generally rather complicated and sometimes not very practical.

The object of the present invention is to avoid this disadvantage and to realize a gearbox with five speeds and reverse of the type defined at the beginning provided with a safety device which can prevent the accidental engagement of reverse and which is simple and cheap to manufacture and very reliable and practical.

In order to achieve this object, the invention provides a gearbox with five speeds and reverse, of the type specified above, characterised in that the safety device further comprises a pawl supported transversely of the appendage by the support structure so as to be pivotable about an axis perpendicular to the control rod against the action of a biasing spring, the pawl having two lateral projections together defining a stop recess in which the catch appendage of the control rod is engaged when the control rod is rotated from the angular position corresponding to the engagement of the fifth gear ratio to the angular position corresponding to the engagement of reverse, a thrust seat also being defined between the lateral projections and the pawl, in which the catch appendage is located as a result of the rotation of the control rod into the angular position corresponding to the engagement of reverse, and the catch appendage being disengageable from the thrust seat as a result of the rotation of the control rod in the opposite sense due to the pivoting of the pawl against the action of the biasing spring.

The invention will now be described in detail with reference to the appended drawings, provided purely by way of non-limiting example, in which:

Figure 1 is a simplified sectional view of part of a gearbox according to the invention, with five speeds and reverse,

Figure 2 is a sectional view taken on the line II-II of Figure 1 in a first operative condition of the gearbox,

Figures 3 to 9 are views similar to Figure 2 showing different operative conditions of the gearbox,

Figure 10 is an enlarged view of part of Figure 9, and

Figure 11 is a functional diagram of the gearbox of the invention.

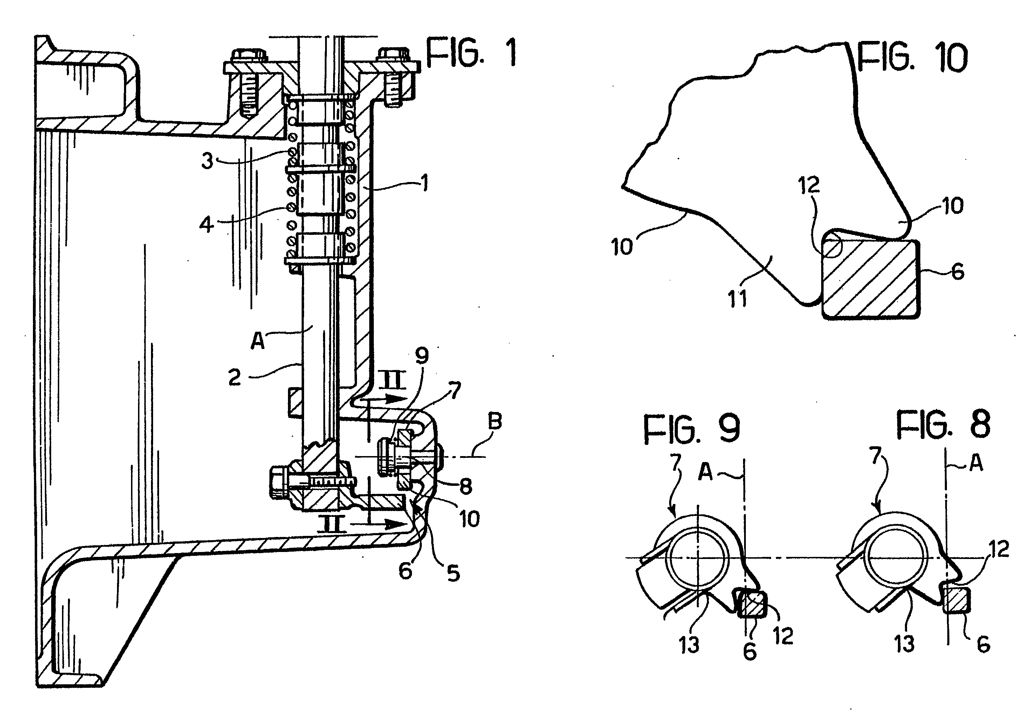

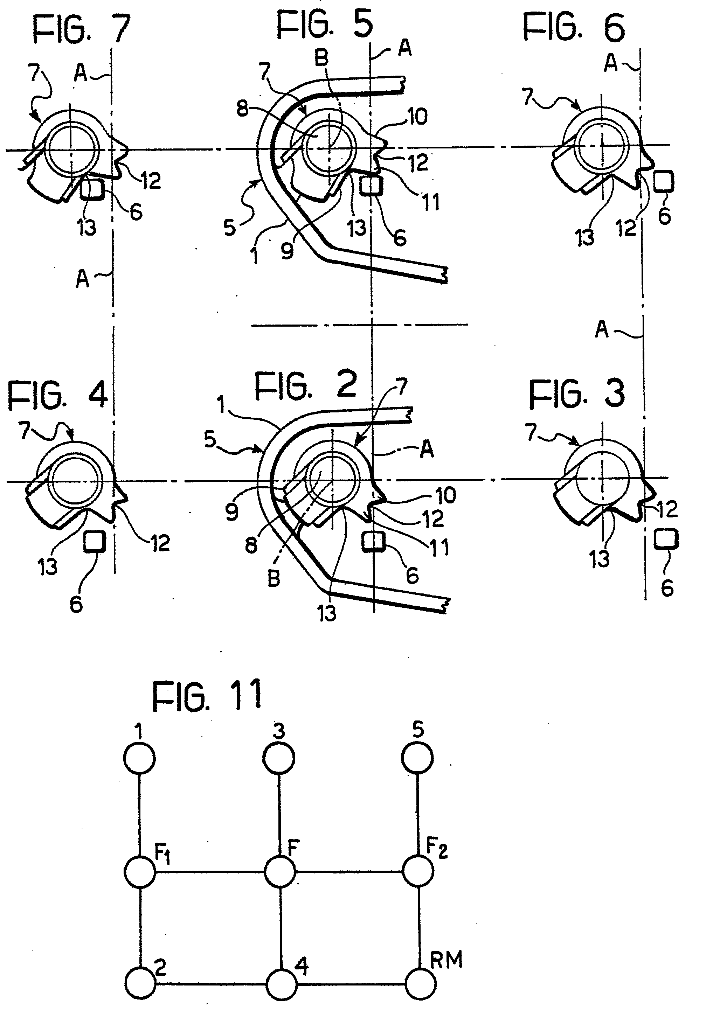

With reference initially to Figure 1, a part of the housing of a motor vehicle gearbox according to the invention, with five speeds and reverse,is generally indicated 1. The housing 1 supports, close to one of its ends, a control rod 2 the axis of which is indicated A. The control rod 2 can be translated along its own axis A and rotated about this axis in a manner known to the expert in the art, by means of a manually-operated gear lever. By way of example, Figure 11 shows schematically the various positions which the control rod 2 can assume by means of corresponding movements of the gear lever. With reference to this drawing, the control rod A may assume a second axial selection position, indicated F, corresponding to the neutral condition of the gearbox, a first axial selection position, indicated $F_1$, and a third axial selection position , indicated $F_2$. The pairs of gear ratios available are selected in these axial positions: in particular, in the first position $F_1$ the pair constituted by the first and second gear ratios are selected, in the position F the pair constituted by the third and fourth gear ratios, and in the position $F_2$ the pair constituted by the fifth gear ratio and reverse. In each of these axial selection positions, the rotation of the control rod 2 in one sense or in the opposite sense enables the engagement of one ratio or the other of the pair selected. Thus, in the selection position $F_1$ it is possible to engage the first or the second gear ratio, in the position F the third or fourth gear ratio, and in the position $F_2$ the fifth gear ratio or reverse.

Of the three axial selection positions $F_1,F,F_2$, the intermediate position F is a stable position since the control rod 2 is normally urged axially towards this position by the action of a pair of opposing helical biassing springs 3 and 4.

The control rod 2 has an associated safety device, generally indicated 5 in Figure 1, which has the function of preventing rotation of the control rod 2 from the angular position corresponding to the engagement of the fifth gear ratio to the angular position corresponding to the engagement of reverse,when it is located in the axial selection position $F_2$. In practice, the function of the safety device 5 is to prevent the accidental or undesirable engagement of reverse during forward movement of the vehicle in which the gearbox is mounted as a result of an erroneous movement by the driver.

The safety device 5 comprises essentially a catch appendage 6 projecting radially from the axially inner end of the control rod 2 towards the wall of the housing 1 and a pawl 7 carried by this wall of the housing 1 and able to cooperate, in the manner clarified below, with the catch appendage 6. As illustrated in greater detail in Figures 2 to 10, the latter preferably has a prismatic shape with a quadrilateral section.

The pawl 7 is constituted by a plate located transverse the appendage 6 and pivotally supported by the wall of the housing 1 by means of a pin 8 the axis of which, indicated B, is perpendicular to the axis A of the control rod 2. The pawl 7 is acted upon by a pin spring 9 wound on the pin 8 and tending to oppose its pivoting in one sense or in the opposite sense from a rest position illustrated in Figures 2 to 4, 6 and 8.

The pawl 7 has two lateral projections 10, 11 between which is defined a stop recess 12 which is substantially right-angled in shape, and the function of which will be explained below. Furthermore, beneath the lateral projection 11 there is defined a thrust seat 13 the function of which will also be explained below.

The operation of the safety device 5 is as follows.

As stated above, the axial selection position F of the control rod 2 corresponds to the stable, neutral condition of the gearbox. In this position F, as in the other axial selection position $F_1$, the catch appendage 6 does not interfere with the pawl 7. This can be seen particularly in Figures 2, 3 and 4 which show the position assumed by the catch appendage 6 relative to the pawl 7 in the neutral position F, in the position of engagement of the third gear ratio, and in the position of engagement of the fourth gear ratio, respectively.

The interaction of the catch appendage 6 and the pawl 7 occurs, however, when the control rod 2 is in its axial selection position $F_2$ for controlling the engagement of the fifth gear ratio or reverse. Figure 5 illustrates exactly the position assumed by the appendage 6 in this condition, before the engagement of the fifth gear ratio (Figure 6) or reverse (Figure 7).

As shown in Figure 5, in this situation, the catch appendage 6 bears against the outer side of the lateral projection 11 and the pawl 7 is moved angularly in the anticlockwise sense in the drawing relative to the rest position illustrated in Figures 2 to 4, against the action of the biassing spring 9.

If the control rod 2 is rotated from the position of Figure 5 to engage the fifth gear ratio, the catch appendage 6 locates itself in the position of Figure 6, freeing the pawl 7 and thus allowing it to snap back into the rest position under the action of the biassing spring 9.

If, from the position of Figure 5, the control rod 2 is rotated in the opposite sense corresponding to the engagement of reverse, however, the catch appendage 6 moves the opposite way into correspondence with the thrust seat 13. For subsequent return to the neutral position of Figure 5, it suffices to rotate the control rod 2 correspondingly.

In the condition of engagement of the fifth gear ratio illustrated in Figure 6, movement of the control rod 2 to the position of engagement of reverse shown in Figure 7 is prevented. In fact, in this event, the corresponding rotation imparted to the control rod 2 causes the catch appendage 6 to move close to (Figure 8) and engage (Figures 9 and 10) a stop recess 12 of the pawl 7. The catch appendage 6 is inserted in this stop recess 12 by form coupling and a subsequent rotation of the control rod 2 towards the position of engagement of reverse is thus prevented. In order to effect this movement, it is necessary to dispose the control rod 2 angularly in the neutral position $F_2$ shown in Figure 9 and subsequently to move the control rod 2 towards the neutral rest position F, so as to move the catch appendage 6 away from the pawl 7 and disengage this appendage 6 from the stop recess 12 which is thus returned to the rest position illustrated in Figure 2. The engagement of reverse may thus be effected by returning the control rod 2 to the axial selection position $F_2$ (Figure 5) and rotating the rod into the position of engagement of reverse shown in Figure 7.

## Claims

1. Motor vehicle gearbox with five speeds and reverse, including a control rod (2) carried by a support structure (1) so as to be movable axially between three axial selection positions, in the first ($F_1$) of which it enables the selection of the first or second gear ratio, in the second (F) the selection of the third or fourth gear ratio, and in the third ($F_2$) the selection of the fifth gear ratio or reverse, resilient means (3, 4) biassing the control rod into the second position which corresponds to the neutral condition of the gearbox, and the control rod being rotatable, in each of the axial selection positions, into first or second opposite angular positions for the respective engagement of the first or second gear ratio, the third or fourth gear ratio, and the fifth gear ratio or reverse, and in which a safety device (5) comprising a catch appendage (6) projecting radially from the control rod (2) is provided for preventing the rotation of the control rod from the first angular position corresponding to the engagement of the fifth gear ratio to the second angular position corresponding to the engagement of reverse, when it is located in the third axial selection position ($F_2$), characterised in that the safety device (5) further comprises a pawl (7) supported transversely of the catch appendage (6) by the support structure (1) so as to be pivotable about an axis (B) perpendicular to the control rod (2) against the action of a biassing spring (9), the pawl having two lateral projections (10,11) together defining a stop recess (12) in which the catch appendage (6) of the control rod (2) is engaged when the control rod is rotated from the angular position corresponding to the engagement of the fifth gear ratio to the angular position corresponding to the engagement of reverse, a thrust seat (13) also being defined between the lateral projections (10,11) and the pawl (7), in which the catch appendage (6) is located as a result of the rotation of the control rod (2) into the angular position corresponding to the engagement of reverse, and the catch appendage (6) being disengageable from the thrust seat (13) being allowed as a result of the rotation of the control rod (2) in the opposite sense due to the pivoting of the pawl (7) against the action of the biassing spring (9).

2. Gearbox according to Claim 1, characterised in that the stop recess (12) for the pawl (7) has a substantially right-angled profile.

**Revendications**

1. Boîte de vitesses pour véhicule automobile comprenant cinq rapports et une marche arrière, du type qui comprend une tige de commande (2) portée par une structure support (1) de manière à pouvoir se déplacer axialement entre trois positions axiales de sélection, dans la première (F₁) desquelles elle permet la sélection du premier ou du deuxième rapport, tandis que dans la deuxième (F), elle permet la sélection du troisième ou quatrième rapport et que, dans la troisième (F₂), elle permet la sélection du cinquième rapport ou de la marche arrière, des moyens élastiques (3, 4) qui tendent à placer la tige de commande dans la deuxième position, qui correspond au point mort de la boîte de vitesses, la tige de commande pouvant être amenée par rotation, dans chacune des positions axiales de sélection, dans une première ou une deuxième positions angulaires opposées, pour engager respectivement le premier rapport ou le deuxième rapport, le troisième rapport ou le quatrième rapport et le cinquième rapport ou la marche arrière, dans lesquelles un dispositif de sécurité (5) comprenant un doigt d'arrêt (6) qui fait saillie radialement sur la tige de commande (2) est prévu pour empêcher la tige de commande de tourner de la première position angulaire, qui correspond à l'engagement du cinquième rapport, à la deuxième position angulaire, qui correspond à l'engagement de la marche arrière, lorsque cette tige est placée dans la troisième position axiale de sélection, caractérisée en ce que le dispositif de sécurité (5) comprend en outre un cliquet (7) supporté transversalement au doigt d'arrêt (6) par la structure support (1) de manière à pouvoir pivoter autour d'un axe (B) perpendiculaire à la tige de commande (2) à l'encontre de l'action d'un ressort de rappel (9), le cliquet possédant deux saillies latérales (10, 11) qui définissent ensemble un cran d'arrêt (12) dans lequel le doigt d'arrêt (6) de la tige de commande (2) s'engage lorsqu'on fait tourner la tige de commande de la position angulaire qui correspond à l'engagement du cinquième rapport à la position angulaire qui correspond à l'engagement de la marche arrière, une portée de butée (13) étant aussi définie entre les saillies latérales (10, 11) et le cliquet (7), portée dans laquelle le doigt d'arrêt (6) se loge sous l'effet de la rotation de la tige de commande (2) qui place cette tige dans la position angulaire correspondant à l'engagement de la marche arrière, et le doigt d'arrêt (6) pouvant se dégager de la portée de butée (13) par suite de la rotation de la tige de commande (2) exécutée dans le sens opposé, qui s'effectue sous l'effet du pivotement du cliquet (7) exécuté à l'encontre de l'action du ressort de rappel (9).

2. Boîte de vitesses selon la revendication 1, caractérisée en ce que le cran d'arrêt (12) du cliquet (7) présente un profil sensiblement à angle droit.

**Patentansprüche**

1. Kraftfahrzeuggetriebe mit fünf Vorwärtsgängen und einem Rückwärtsgang mit einer Steuerstange (2), die in einer Tragkonstruktion (1) so gelagert ist, daß sie in axialer Richtung zwischen drei axialen Wählstellungen bewegbar ist, wobei sie in der ersten (F₁) dieser Wählstellungen die Auswahl des ersten oder zweiten Gangs, in der zweiten Wählstellung (F) die Auswahl des dritten oder vierten Gangs und in der dritten Wählstellung (F₂) die Auswahl des fünften Gangs oder des Rückwärtsgangs ermöglicht, sowie mit federnden Mitteln (3, 4), die die Steuerstange in die zweite Wählstellung vorspannen, die der neutralen Stellung des Kraftfahrzeuggetriebes entspricht, wobei die Steuerstange in jeder ihrer axialen Wählstellungen in eine erste oder eine entgegengesetzte zweite Winkelposition drehbar ist, wodurch der erste oder zweite Gang bzw. der dritte oder vierte Gang bzw. der fünfte Gang oder der Rückwärtsgang eingelegt werden, und wobei eine Sicherheitsvorrichtung (5) vorgesehen ist, die einen Rastansatz (6) besitzt, der in radialer Richtung von der Steuerstange (2) wegragt und verhindert, daß die Steuerstange aus der ersten, dem Einlegen des fünften Gangs entsprechenden Winkelposition in die zweite, dem Einlegen des Rückwärtsgangs entsprechende Winkelposition gedreht werden kann, wenn sie sich in der dritten axialen Wählstellung (F₂) befindet, dadurch gekennzeichnet, daß die Sicherheitsvorrichtung (5) ferner eine Klaue (7) umfaßt, die an der Tragkonstruktion (1) quer zu dem Rastansatz (6) so gelagert ist, daß sie (7) gegen die Wirkung einer Vorspannfeder (9) um eine senkrecht zu der Steuerstange (2) verlaufende Achse (B) verschwenkbar ist, daß die Klaue zwei seitliche Vorsprünge (10, 11) aufweist, die zusammen eine Rastvertiefung (12) begrenzen, mit der der Rastansatz (6) der Steuerstange (2) in Eingriff steht, wenn die Steuerstange aus der dem Einlegen des fünften Gangs entsprechenden Winkelposition in die dem Einlegen des Rückwärtsgangs entsprechende Winkelposition gedreht wird, daß ferner zwischen den seitlichen Vorsprüngen (10, 11) und der Klaue (7) ein Rastsitz (13) angeordnet ist, in den der Rastansatz (6) gelangt, wenn die Steuerstange (2) in die dem Einlegen des Rückwärtsgangs entsprechende Winkelposition gedreht wurde, und daß der Rastansatz (6) dadurch aus dem Rastsitz (13) herausführbar ist, daß die Steuerstange (2) durch Verschwenken des Rastansatzes (7) gegen die Wirkung der Vorspannfeder (9) in entgegengesetzter Richtung gedreht wurde.

2. Kraftfahrzeuggetriebe nach Anspruch 1, dadurch gekennzeichnet, daß die Rastvertiefung (12) für die Klaue (7) ein im wesentliches rechtwinkliges Profil hat.

FIG. 1

FIG. 8

FIG. 9

FIG. 10

FIG. 7

FIG. 5

FIG. 6

FIG. 4

FIG. 2

FIG. 3

FIG. 11